# EUROPEAN PATENT SPECIFICATION

(11) **EP 4 176 957 B1**
(45) Date of publication and mention of the grant of the patent: **03.12.2025**
(21) Application number: 21833335.9
(22) Date of filing: 02.07.2021
(51) Int. Cl.: B01D 46/00, B01D 46/42

(54) **FILTER UNIT AND AIR PURIFIER HAVING SAME**
FILTEREINHEIT UND LUFTREINIGER DAMIT
ENSEMBLE FILTRE ET PURIFICATEUR D'AIR DOTÉ DUDIT ENSEMBLE

(30) Priority: 03.07.2020 KR 20200082173
(43) Date of publication of application: 10.05.2023
(73) Proprietor: Coway Co., Ltd., Gongju-si, Chungcheongnam-do 32508 (KR)
(72) Inventor: CHOI, Hyun Kuk, Seoul 08800 (KR); SONG, Kyu Wan, Seoul 08800 (KR); KYOUNG, Mi Youn, Seoul 08800 (KR)
(74) Representative: Schneiders & Behrendt Bochum
(86) International application number: PCT/KR2021/008464
(87) International publication number: WO 2022/005261

(56) References cited:
- WO-A1-2020/076751
- JP-A- 2013 176 749
- JP-A- H09 315 142
- KR-A- 20060 112 491
- KR-A- 20100 078 792
- KR-A- 20140 087 352
- US-A1- 2017 151 522
- US-B2- 10 245 542

## Description

### TECHNICAL FIELD

The present disclosure relates to a filter unit and an air purifier provided with the same, and relates to a filter unit that can be easily discarded by reducing the overall size while minimizing the phenomenon in which collected foreign substances are blown to the outside when discarding the used filter unit, and an air purifier provided with the same.

### BACKGROUND

Recently, as fine dust and air pollution become serious, the need for an air purifier is gradually increasing.

In general, an air purifier is a means of purifying indoor air pollution, and a device that sucks polluted air, filters out dust, odors, and pollutant particles contained in the air with a filter to purify the sucked air into clean air, and then discharges the purified air to the outside.

In a commonly used filter-type air purifier, the air sucked in by a fan is purified through a filter and discharged. For example, a pre-filter removes large dust, a HEPA filter catches fine dust, and an activated carbon filter removes odors.

Accordingly, the air purifier may basically include a blower for discharging purified air while introducing polluted air, and at least one filter mounted to filter out dust, odor, and pollutant particles contained in the introduced air.

In other words, air purifiers with various methods have a common feature in that at least one filter is used to remove dust or germs, and the filter used is periodically replaced. The filter replacement cycle varies depending on the function, but the filter should be replaced once in 3 or 4 months at least.

If the filter is used for a long period of time, the filter is clogged with dust or contaminants adsorbed on the filter and the original function of the filter is lost, so that it is essential to discard the filter installed in the air purifier and replace it with another filter after a certain period of time has elapsed.

However, when a user disposes of a used filter, it is not easy to dispose of the used filter due to the overall size of the filter, so there is a need for a filter having a foldable structure when discarded. As for the foldable filter, Korean Patent No. 10-2044030 of Zetta Global Inc. "Filter using carbon nanofibers and method of manufacturing same" and Korean Patent Application Publication No. 10-2008-0041801 of Hyundai Motor Company "Foldable air filter unit for vehicles and air cleaner device" have been known.

However, these conventional technologies adopt a folding structure for the purpose of cost reduction or double filtering during use, and do not take into account the situation in which the filter is unfolded during use and then folded only when discarded, so that they cannot resolve the problems occurring during disposal of the filter.

That is, when the used filter containing foreign substances such as dust is moved for disposal, these foreign substances may be separated from the filter and dirty the user's hands or clothes, and there is also a concern that the foreign substances blowing to the outside may harm the user's health due to the possibility of entering the user's respiratory system, but the conventional technologies still have such problems.

US 2017/0151522 A1 discloses a foldable filter frame with certain fixing means to keep the foldable filter either open or in a closed state.

### DETAILED DESCRIPTION OF INVENTION

### TECHNICAL PROBLEMS

In view of the above, the present disclosure provides a filter unit that can be easily discarded by reducing the overall size while minimizing the phenomenon in which collected foreign substances are blown to the outside when discarding the used filter unit, and an air purifier provided with the same.

### TECHNICAL SOLUTION

An filter unit according to an embodiment of the present disclosure to achieve such a purpose, includes: a frame having an outer shape surrounding an opening through which air flows and having a collection surface and an opposite surface opposite to the collection surface; and a filter member that is disposed in the opening and filters foreign substances included in the flowing air, wherein a folding groove is formed on the opposite surface of the frame, and wherein the folding groove is formed at at least two points of the frame so that when an external force is applied from the opposite surface of the frame toward the collection surface, one of a part and another part of the frame divided based on the folding groove relatively rotates toward the other one, and the frame is folded in such a way that a portion of the collection surface approaches another portion of the collection surface.

The folding groove may be formed at each of one point of the frame and an opposite point corresponding thereto, so that the frame is folded in half when an external force is applied from the opposite surface of the frame toward the collection surface.

The frame may further include a reinforcing rib having both ends connected to the frame to partition the opening.

The filter unit further includes: a fixing unit coupled to the frame and configured to fix relative positions of one part and another part of the frame divided based on the folding groove.

The fixing unit includes: a holder formed on any one of the one part and the another part of the frame divided based on the folding groove; and a fixing protrusion formed to protrude on the other one, of the one part and the another part of the frame divided based on the folding groove, on which the holder is not formed, and configured to be fixed to the holder.

The holder extends from any one of the one part and the another part of the frame so that a portion of the holder is disposed above the folding groove.

The holder includes a fixing hole in which the fixing protrusion is inserted.

The fixing unit may be configured to fix the frame such that the one part and the another part of the frame divided based on the folding groove form a straight angle.

The fixing unit may be configured to fix the frame such that the one part and the another part of the frame divided based on the folding groove are arranged side by side.

The fixing unit includes: a fixing hole formed on any one of the one part and the another part of the frame divided based on the folding groove; and a fixing protrusion formed to protrude on the other one, of the one part and the another part of the frame divided based on the folding groove, on which the holder is not formed, and configured to be fixed to the fixing hole.

The frame may include a handle portion formed at an upper portion thereof and a sliding portion formed along an outer peripheral surface thereof.

An air purifier according to an embodiment of the present disclosure includes: a filter unit described above; and a blower for providing blowing force to allow outside air to pass through the air filter.

The filter unit may be disposed such that air flows through the collection surface and the opposite surface in this order.

### EFFECT OF INVENTION

With the filter unit and the air purifier provided with the same according to one embodiment of the present disclosure, since the filter unit can be readily attached to and detached from the air purifier, it is possible to minimize the impact when removing the filter unit that requires replacement or cleaning, thereby minimizing the phenomenon in which foreign substances collected by the filter unit are blown to the outside to result in indoor contamination.

In addition, when discarding the used filter unit, the user can discard the filter unit in the folded state, thereby reducing the overall size and easily discarding the filter unit.

Further, when the user folds the filter unit, by folding the filter unit so that the surfaces on which foreign substances such as dust are collected face each other, blowing away of the foreign substances can be minimized, which prevents the user's hands or clothes from being dirtied or prevents the blown foreign substances from entering the user's respiratory system in advance.

Moreover, by employing the structure in which the filter unit is fixed to maintain the unfolded state when in use or to maintain the folded state when discarded, the shape of the filter unit can be stably maintained depending on circumstances.

### BRIEF DESCRIPTION OF THE DRAWINGS

FIG. 1 is a projection perspective view showing an air purifier that does not form part of the invention but represents background art that is useful for understanding the invention.
FIG. 2 is a perspective view of a filter unit that does not form part of the invention but represents background art that is useful for understanding the invention.
FIG. 3 is an enlarged view of part A in FIG. 2 and does not form part of the invention but represents background art that is useful for understanding the invention.
FIG. 4 is a view showing a folded state of a filter unit that does not form part of the invention but represents background art that is useful for understanding the invention.
FIG. 5 is a perspective view of a filter unit according to a second embodiment of the present disclosure.
FIG. 6 is an enlarged view of part B in FIG. 5.
FIG. 7 is a view showing a folded state of the filter unit according to the second embodiment of the present disclosure.
FIG. 8 is a perspective view of a filter unit according to a third embodiment of the present disclosure.
FIG. 9 is an enlarged view of part C in FIG. 8.
FIG. 10 is a view showing a folded state of the filter unit according to the third embodiment of the present disclosure.
FIG. 11 is a perspective view of a filter unit that does not form part of the invention but represents background art that is useful for understanding the invention.
FIG. 12 is a view showing a folded state of a filter unit that does not form part of the invention but represents background art that is useful for understanding the invention.

### BEST MODE FOR CARRYING OUT THE INVENTION

Hereinafter, a preferred embodiment of the present invention will be described in detail with reference to the accompanying drawings.

Prior to this, the embodiments described in the present specification and the configurations shown in the drawings are only one of the most preferred embodiments of the present invention and do not represent all of the technical ideas of the present invention. Therefore, it should be understood that there may be various equivalents and modified examples.

In order to clearly describe the present invention, parts irrelevant to the description are omitted, and the same reference numerals are assigned to the same or similar components throughout the specification.

Since the size and thickness of each component shown in the drawings are arbitrarily shown for convenience of description, the present invention is not necessarily limited to what is shown in the drawings, and the thickness is enlarged to clearly express various parts and regions.

Further, in the entire specification, when a certain component is said to "include", it means that it may further include other components, not excluding other components unless otherwise stated.

In addition, the terms such as "... unit", "... means", "... part", and "... member" described in the entire specification means inclusive units of composition that performs at least one function or operation.

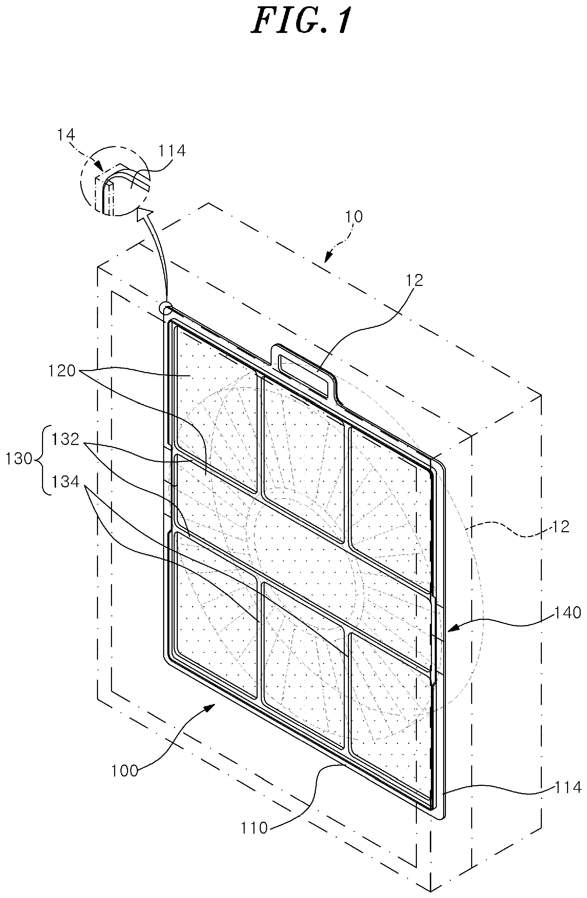

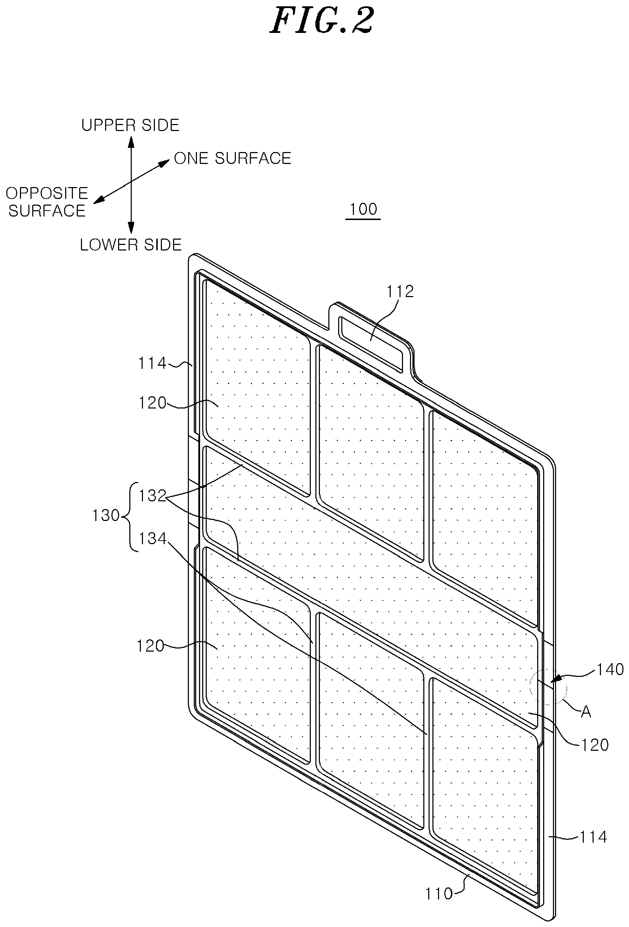

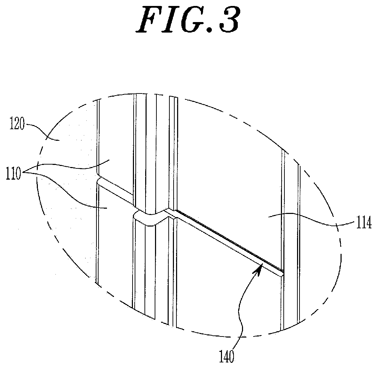

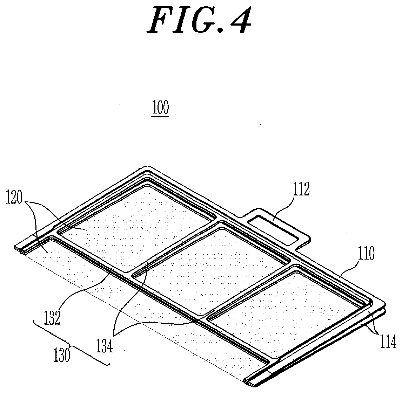

FIG. 1 is a projection perspective view showing an air purifier that does not form part of the invention but represents background art that is useful for understanding the invention, FIG. 2 is a perspective view of a filter unit that does not form part of the invention but represents background art that is useful for understanding the invention, FIG. 3 is an enlarged view of part A of FIG. 2 and does not form part of the invention but represents background art that is useful for understanding the invention, and FIG. 4 is a view showing a folded state of the filter unit according to the first embodiment of the present disclosure and does not form part of the invention but represents background art that is useful for understanding the invention.

Referring to the drawings, a filter unit 100 according to one embodiment of the present disclosure can be easily discarded by reducing the overall size thereof while minimizing the phenomenon in which foreign substances collected in a filter member 120 are blown to the outside when the used filter unit 100 is discarded.

As shown in FIG. 1, the filter unit 100 may be applied to an air purifier 10 including a blower 12 for providing a blowing force so that outside air passes through the filter unit 100.

As shown in FIGS. 2 and 3, the filter unit 100 according to the first embodiment of the present disclosure includes a frame 110 and a filter member 120.

First, the frame 110 has an outer shape surrounding an opening through which air can flow, and has a collection surface formed on a side facing the flowing air and an opposite surface formed on a side opposite to the collection surface.

That is, the frame 110 may include, for example, a quadrangular frame-shaped opening through which air flows except for the periphery of the frame 110.

Further, the frame 110 may include a handle portion 112 formed at an upper side thereof and a sliding portion 114 formed along an outer peripheral surface thereof.

The sliding portion 114 may be detachably inserted into a rail groove 14 formed in a main body of the air purifier 10 or a cover detachably provided in the main body in a sliding manner.

Accordingly, the filter unit 100 can be mounted to the air purifier 10 without a separate fastening means by inserting the sliding portion 114 into the rail groove 14. In addition, the filter unit 100 may be disposed such that air flows through the collection surface and the opposite surface in this order.

However, the structure in which the filter unit 100 is mounted on the air purifier 10 is not limited to the above, and other structures may be adopted as needed.

In the present embodiment, the filter member 120 is formed in the opening and filters out foreign substances included in the flowing air.

The filter member 120 may filter out and collect foreign substances from the air introduced by the operation of the blower 12.

Meanwhile, the frame 110 may further include a reinforcing rib 130 having both ends connected to an inner peripheral surface of the frame 110 to partition the opening.

The reinforcing rib 130 reinforces the rigidity of the frame 110 and also partition the filter member 120 together, thereby preventing the filter member 120 from being bent or separated from the frame 110 due to foreign substances such as dust collected in the filter member 120.

The reinforcing rib 130 includes horizontal reinforcing ribs 132 and vertical reinforcing ribs 134.

First, the horizontal reinforcing ribs 132 are disposed at positions spaced apart at preset intervals from a top or bottom of the frame 110 and partition the opening in a longitudinal direction of the frame 110.

In this case, the horizontal reinforcing ribs 132 may be spaced apart from each other toward the top and the bottom of the frame 110, and may connect both sides of the inner peripheral surface of the frame 110 in the longitudinal direction.

Further, the vertical reinforcing ribs 134 may partition the opening between the inner peripheral surface of the frame 110 and the horizontal reinforcing ribs 132. The vertical reinforcing ribs 134 may connect the horizontal reinforcing ribs 132 and the upper or lower inner peripheral surface of the frame 110.

In this case, the vertical reinforcing ribs 134 may be disposed at positions spaced apart at preset intervals along the longitudinal direction of the frame 110.

In the first embodiment of the present disclosure, a folding groove 140 is formed on the opposite surface of the frame 110, which is opposite to the collection surface facing the flowing air.

The folding groove 140 may be formed at at least two points, so that when an external force is applied from the opposite surface of the frame 110 toward the collection surface, one (upper part in the drawing), of one part and another part of the frame 110 divided based on the folding groove 140, relatively rotates toward the other one (lower part in the drawing) of the frame 110 and the frame 110 is folded in such a way that a portion of the collection surface of the frame 110 approaches another portion of the same surface.

In this case, the folding groove 140 may be formed at each of one point of the frame 110 and an opposite point corresponding thereto so that the frame 110 is folded in half when an external force is applied from the opposite surface of the frame 110 toward the collection surface.

That is, the folding groove 140 may be formed on both sides along the longitudinal direction from the center of the frame 110 based on an up-down direction of the frame 110.

Specifically, as shown in FIG. 4, the folding groove 140 is formed such that when an external force is applied from the opposite surface of the frame 110 toward the collection surface of the frame 110, one (upper part of the frame 110 above the folding groove 140 in the drawing) of one part and another part of the frame 110 divided based on the folding groove 140 relatively rotates toward the other one (lower part of the frame 110 below the folding groove 140 in the drawing) and the frame 110 is folded in such a way that a portion of the collection surface of the frame 110 approaches another portion of the collection surface.

The filter unit 100 according to the first embodiment of the present disclosure configured as described above is removed from the air purifier 10 in a sliding manner by a user when replacement is required.

Then, when the removed filter unit 100 is discarded, in order to minimize the exposure or dispersion of the foreign substances collected in the filter member 120 in a direction toward the collection surface of the frame 110 to the outside, the user can fold the frame 100 by applying an external force toward the collection surface of the frame 110 from the opposite surface of the frame 110 at the top and bottom of the frame 110 based on the folding groove 140 (see FIG. 4).

That is, when the user folds the filter unit 100, the filter member 120 is folded so that the surfaces on which foreign substances such as dust are collected face each other, thereby minimizing the foreign substances from blowing away. Accordingly, it is possible to prevent the hands or clothes of the user from being dirtied or foreign substances blown away from entering the user's respiratory system in advance.

In this way, when discarding the used filter unit 100, the user can discard the filter unit 100 while folding the frame 110 in half through the above process, so that the user can easily discard the filter unit 110 by reducing the overall size thereof.

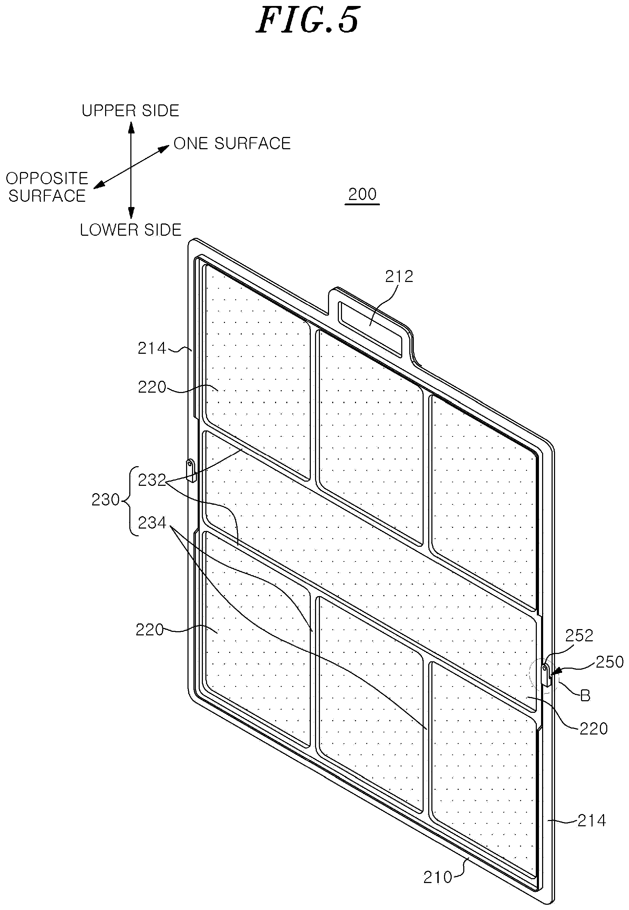

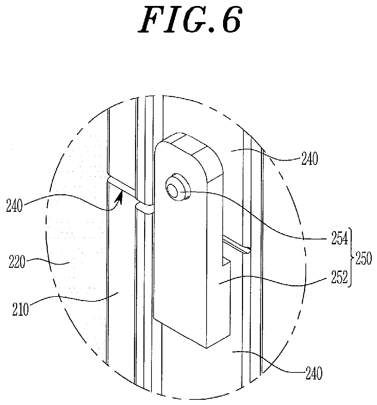

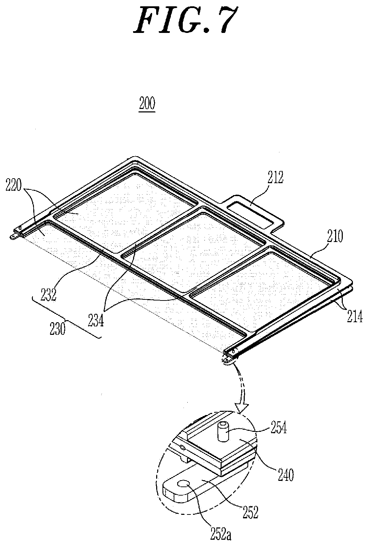

FIG. 5 is a perspective view of a filter unit according to a second embodiment of the present disclosure, FIG. 6 is an enlarged view of part B in FIG. 5, and FIG. 7 is a view showing a folded state of the filter unit according to the second embodiment of the present disclosure. Hereinafter, the description of the second embodiment will be made only on the different parts from those of the first embodiment, and the description on the same parts as those of the first embodiment will be omitted.

In the second embodiment of the present disclosure, a filter unit 200 may further include a fixing unit 250 coupled to a frame 210 and configured to fix relative positions of one part and another part of the frame 210 divided based on a folding groove 240.

As shown in FIG. 6, the fixing unit 250 includes a holder 252 and a fixing protrusion 254.

First, the holder 252 may be formed on any one of one part and another part of the frame 210 divided based on the folding groove 240.

That is, in the second embodiment of the present disclosure, the holder 252 may be disposed at a position close to the folding groove 240 in a lower portion of the opposite surface of the frame 210 based on the folding groove 240, and may protrude from the opposite surface of the frame 210 to a set length.

In addition, the fixing protrusion 254 may be formed to protrude on the other one, of one part and another part of the frame 210 divided based on the folding groove 240, on which the holder 252 is not formed, and may be fixed to the holder 252.

That is, in the second embodiment of the present disclosure, the fixing protrusion 254 is disposed at a position corresponding to the holder 252 in an upper portion of the opposite surface of the frame 210 based on the folding groove 240, and protrudes from the opposite surface of the frame 210 to a set length.

In this case, a fixing hole 252a may be formed in the holder 252 to insert the fixing protrusion 254 therein.

The fixing unit 250 configured as described above is capable of fixing the frame 210, by the fixing protrusion 254 fixed to the holder 252 in a state in which the fixing protrusion 254 is inserted into the fixing hole 252a, so that the upper portion and the lower portion of the frame 210 divided based on the folding groove 240 form a straight angle.

Accordingly, with respect to the folding groove 240, the upper and lower portions of the frame 210 may be more stably fixed through the fixing unit 250 while forming the straight angle.

Since the filter unit 200 according to the second embodiment of the present disclosure configured as described above can be fixed at the straight angle by the fixing unit 250, the shape of the filter unit 200 is stably maintained when used in an unfolded state in the air purifier 10.

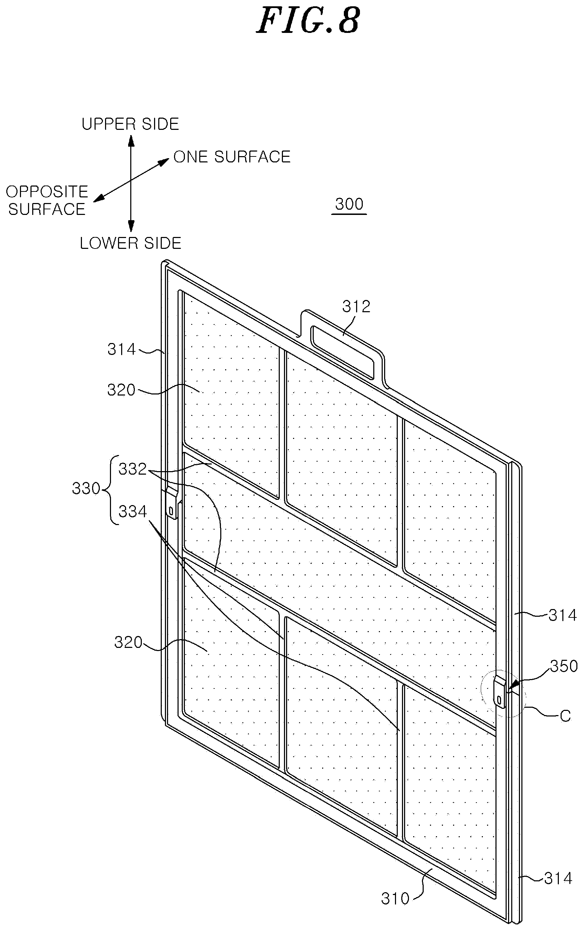

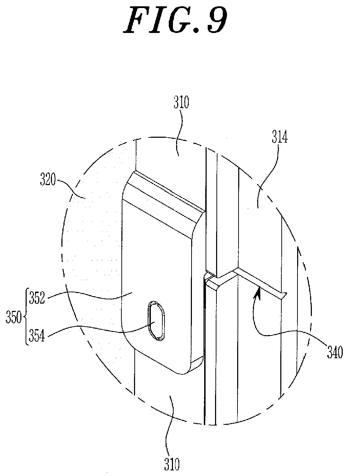

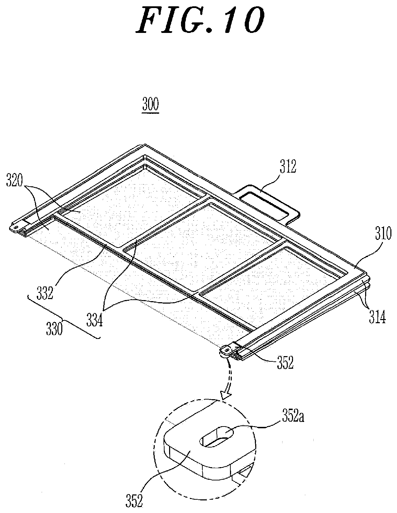

FIG. 8 is a perspective view of a filter unit according to a third embodiment of the present disclosure, FIG. 9 is an enlarged view of part C in FIG. 8, and FIG. 10 is a view showing a folded state of the filter unit according to the third embodiment of the present disclosure. Hereinafter, the description of the third embodiment will be made only on the different parts from those of the first embodiment, and the description on the same parts as those of the first embodiment will be omitted.

In the third embodiment of the present disclosure, a filter unit 300 may further include a fixing unit 350 coupled to a frame 310 to fix relative positions of one part and another part of the frame 310 divided based on a folding groove 340.

As shown in FIG. 9, the fixing unit 350 includes a holder 352 and a fixing protrusion 354.

First, the holder 352 may be formed on any one of one part and another part of the frame 310 divided based on the folding groove 340.

That is, in the third embodiment of the present disclosure, the holder 352 may be disposed at a position close to the folding groove 340 in an upper portion of the opposite surface of the frame 310 based on the folding groove 340, and may protrude from the opposite surface of the frame 310 to a set length.

In addition, the fixing protrusion 354 may be formed to protrude on the other one, of one part and another part of the frame 310 divided based on the folding groove 340, on which the holder 352 is not formed, and may be fixed to the holder 352.

That is, in the third embodiment of the present disclosure, the fixing protrusion 354 is disposed at a position corresponding to the holder 352 in a lower portion of the opposite surface of the frame 310 based on the folding groove 340, and protrudes from the opposite surface of the frame 310 to a set length.

In this case, a fixing hole 352a may be formed in the holder 352 to insert the fixing protrusion 354 therein.

The fixing unit 350 configured as described above is capable of fixing the frame 310, by the fixing protrusion 354 fixed to the holder 352 in a state in which the fixing protrusion 354 is inserted into the fixing hole 352a, so that the upper portion and the lower portion of the frame 310 divided based on the folding groove 340 form a straight angle.

Accordingly, with respect to the folding groove 340, the upper and lower portions of the frame 310 may be more stably fixed through the fixing unit 350 while forming the straight angle.

Since the filter unit 300 according to the third embodiment of the present disclosure configured as described above can be fixed at the straight angle by the fixing unit 350, the shape of the filter unit 300 is stably maintained when used in an unfolded state in the air purifier 10.

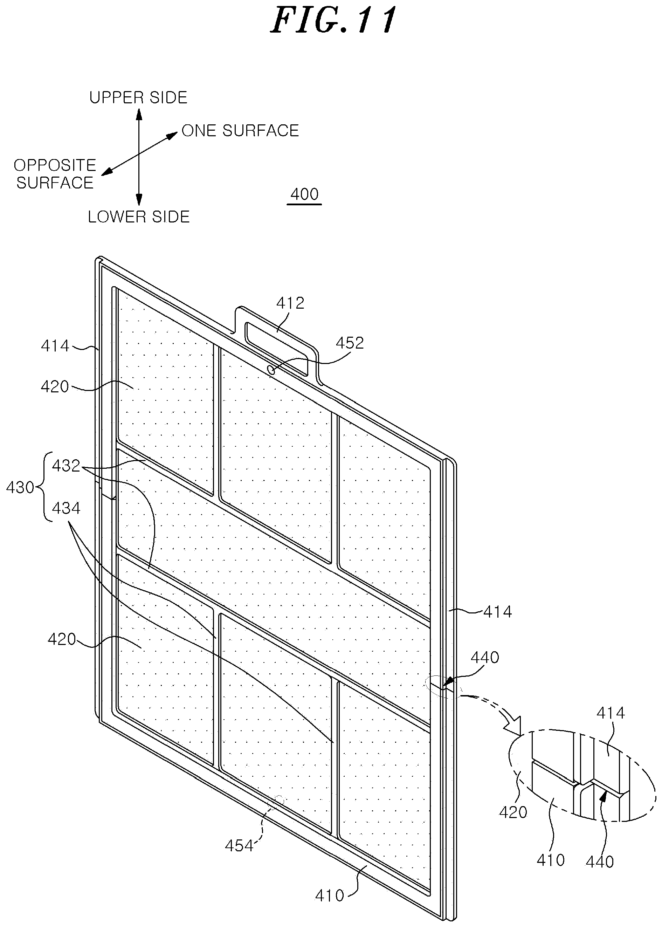

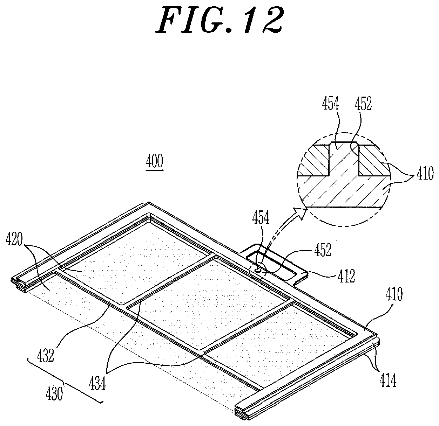

FIG. 11 is a perspective view of a filter unit according to a fourth embodiment of the present disclosure that does not form part of the invention but represents background art that is useful for understanding the invention, and FIG. 12 is a view showing a folded state of the filter unit according to the fourth embodiment of the present disclosure that does not form part of the invention but represents background art that is useful for understanding the invention. Hereinafter, the description of the fourth embodiment will be made only on the different parts from those of the first embodiment, and the description on the same parts as those of the first embodiment will be omitted.

In the fourth embodiment of the present disclosure, a filter unit 400 may further include a fixing unit 450 coupled to a frame 410 to fix relative positions of one part and another part of the frame 410 divided based on a folding groove 440.

As shown in FIG. 12, the fixing unit 450 includes a fixing hole 452 and a fixing protrusion 454.

First, the fixing hole 452 may be formed on any one of one part and another part of the frame 410 divided based on the folding groove 440.

That is, in the fourth embodiment of the present disclosure, the fixing hole 452 may be formed at a position corresponding to the handle portion 412 in an upper portion of the opposite surface of the frame 410 based on the folding groove 440.

In addition, the fixing protrusion 454 may be formed to protrude on the other one, of one part and another part of the frame 410 divided based on the folding groove 440, on which the fixing hole 452 is not formed.

The fixing protrusion 454 may be fixed to the fixing hole 452 in a state in which the frame 410 is folded with respect to the folding groove 440.

That is, in the fourth embodiment of the present disclosure, the fixing protrusion 454 is disposed at a position corresponding to the fixing hole 452 in a lower portion of the collection surface of the frame 410, and protrudes from the collection surface of the frame 410 to a set length.

The fixing unit 450 configured as described above is capable of fixing the frame 410 in a state in which the frame 410 is folded in half so that one part and another part of the frame 410 divided based on the folding groove 440 are arranged side by side.

Since the filter unit 400 according to the fourth embodiment of the present disclosure can be fixed by the fixing unit 450 in a half-folded state, it is possible to prevent the collected foreign substances from dispersing to the outside when moving for disposal.

The filter units 100, 200, 300 and 400 according to the first to fourth embodiments of the present disclosure configured as described above can be readily attached to and detached from the air purifier 10, and it is possible to minimize the impact when removing the filter unit 100, 200, 300, and 400 that requires replacement or cleaning, thereby minimizing the phenomenon in which foreign substances collected by the filter unit 100, 200, 300, and 400 are blown to the outside to result in indoor contamination.

In addition, when discarding the used filter unit 100, 200, 300, and 400, the user can discard the filter unit 100, 200, 300, and 400 in the folded state, thereby reducing the overall size and easily discarding the filter unit.

Further, when the user folds the filter unit 100, 200, 300, and 400, by folding the filter unit so that the surfaces on which foreign substances such as dust are collected face each other, blowing away of the foreign substances can be minimized, which prevents the user's hands or clothes from being dirtied or prevents the blown foreign substances from entering the user's respiratory system in advance.

Moreover, by employing the structure in which the filter unit 100, 200, 300, and 400 is fixed to maintain the unfolded state when in use or to maintain the folded state when discarded, the shape of the filter unit 100, 200, 300, and 400 can be stably maintained depending on circumstances.

## Claims

1. A filter unit comprising:
a frame (110, 210, 310, 410) having an outer shape surrounding an opening through which air flows and having a collection surface and an opposite surface opposite to the collection surface;
a filter member (120, 220, 320, 420) that is disposed in the opening and filters foreign substances included in the flowing air, wherein a folding groove (140, 240, 340, 440) is formed on the opposite surface of the frame (110, 210, 310, 410);
a fixing unit (250, 350, 450) coupled to the frame (110, 210, 310, 410) and configured to fix relative positions of one part and another part of the frame (110, 210, 310, 410) divided based on the folding groove (140, 240, 340, 440),
wherein the folding groove (140, 240, 340, 440) is formed at at least two points of the frame (110, 210, 310, 410) so that when an external force is applied from the opposite surface of the frame (110, 210, 310, 410) toward the collection surface, one of a part and another part of the frame (110, 210, 310, 410) divided based on the folding groove (140, 240, 340, 440) relatively rotates toward the other one, and the frame (110, 210, 310, 410) is folded in such a way that a portion of the collection surface approaches another portion of the collection surface, **characterized in that**
the fixing unit (250, 350) includes:
a holder (252, 352) formed on any one of the one part and the another part of the frame (210, 310) divided based on the folding groove (240, 340, 440), wherein the holder includes a fixing hole (252a, 352a); and
a fixing protrusion (254, 354) formed to protrude on the other one, of the one part and the another part of the frame (210, 310) divided based on the folding groove (240, 340), on which the holder (252, 352) is not formed, and configured to be extended into the fixing hole (252a, 352a) of the holder (252, 352),
wherein the holder (252, 352) is extended from any one of the one part and the another part of the frame (210, 310) so that a portion of the holder (252, 352) disposed above the folding groove (240, 340).

2. The filter unit of claim 1, wherein the folding groove (140, 240, 340, 440) is formed at each of one point of the frame (110, 210, 310, 410) and an opposite point corresponding thereto, so that the frame (110, 210, 310, 410) is folded in half when an external force is applied from the opposite surface of the frame (110, 210, 310, 410) toward the collection surface.

3. The filter unit of claim 1, wherein the frame (110, 210, 310, 410) further includes a reinforcing rib (130, 230, 330, 430) having both ends connected to the frame (110, 210, 310, 410) to partition the opening.

4. The filter unit of claim 1, wherein the fixing unit (250, 350, 450) is configured to fix the frame (210, 310, 410) such that the one part and the another part of the frame (210, 310, 410) divided based on the folding groove (240, 340, 440) form a straight angle.

5. The filter unit of claim 1, wherein the fixing unit (250, 350, 450) is configured to fix the frame (210, 310, 410) such that the one part and the another part of the frame (210, 310, 410) divided based on the folding groove (240, 340, 440) are arranged side by side.

6. The filter unit of claim 1, wherein the frame (110, 210, 310, 410) includes a handle portion (112, 212, 312, 412) formed at an upper portion thereof and a sliding portion (114, 214, 314, 414) formed along an outer peripheral surface thereof.

7. An air purifier comprising:
a filter unit (100, 200, 300, 400) according to any one of claims 1 to 6; and
a blower (12) for providing blowing force to allow outside air to pass through the air filter.

8. The air purifier of claim 7, wherein the filter unit (100, 200, 300, 400) is disposed such that air flows through the collection surface and the opposite surface in this order.

## Patentansprüche

1. Eine Filtereinheit, umfassend:
einen Rahmen (110, 210, 310, 410) mit einer äußeren Form, die eine Öffnung umgibt, durch die Luft strömt, und mit einer Sammelfläche und einer gegenüberliegenden Fläche, die der Sammelfläche gegenüberliegt;
ein Filterelement (120, 220, 320, 420), das in der Öffnung angeordnet ist und fremde Stoffe filtert, die in der strömenden Luft enthalten sind, wobei eine faltbare Nut (140, 240, 340, 440) auf der gegenüberliegenden Fläche des Rahmens (110, 210, 310, 410) ausgebildet ist;
eine Befestigungseinheit (250, 350, 450), die mit dem Rahmen (110, 210, 310, 410) gekoppelt und so konfiguriert ist, dass sie relative Positionen eines Teils und eines anderen Teils des Rahmens (110, 210, 310, 410) fixiert, der basierend auf der faltbaren Nut (140, 240, 340, 440) unterteilt ist,
wobei die faltbare Nut (140, 240, 340, 440) an mindestens zwei Punkten des Rahmens (110, 210, 310, 410) ausgebildet ist, so dass, wenn eine äußere Kraft von der gegenüberliegenden Fläche des Rahmens (110, 210, 310, 410) in Richtung der Sammeloberfläche aufgebracht wird, eines von einem Teil und einem anderen Teil des Rahmens (110,210, 310, 410), der basierend auf der faltbaren Nut (140, 240, 340, 440) unterteilt ist, sich relativ zu dem anderen dreht, und der Rahmen (110, 210, 310, 410) in einer solchen Weise gefaltet wird, dass sich ein Abschnitt der Sammelfläche einem anderen Abschnitt der Sammelfläche nähert, **dadurch gekennzeichnet, dass**
die Befestigungseinheit (250, 350) umfasst:
einen Halter (252, 352), der an einem von dem einen Teil und dem anderen Teil des Rahmens (210, 310) ausgebildet ist, der basierend auf der faltbaren Nut (240, 340, 440) unterteilt ist, wobei der Halter ein Befestigungsloch (252a, 352a) aufweist; und
einen Befestigungsvorsprung (254, 354), der so ausgebildet ist, dass er von dem anderen Teil, von dem einen Teil und dem anderen Teil des Rahmens (210, 310), der basierend auf der faltbaren Nut (240, 340) unterteilt ist, an dem der Halter (252, 352) nicht ausgebildet ist, hervorsteht, und der so konfiguriert ist, dass er sich in das Befestigungsloch (252a, 352a) des Halters (252, 352) erstreckt,
wobei der Halter (252, 352) sich von einem von dem einen Teil und dem anderen Teil des Rahmens (210, 310) erstreckt, so dass ein Abschnitt des Halters (252, 352) über der faltbaren Nut (240, 340) angeordnet ist.

2. Die Filtereinheit nach Anspruch 1, wobei die faltbare Nut (140, 240, 340, 440) jeweils an einem Punkt des Rahmens (110, 210, 310, 410) und einem diesem entsprechenden gegenüberliegenden Punkt ausgebildet ist, so dass der Rahmen (110, 210, 310, 410) in der Hälfte gefaltet wird, wenn eine äußere Kraft von der gegenüberliegenden Fläche des Rahmens (110, 210, 310, 410) in Richtung der Sammelfläche aufgebracht wird.

3. Die Filtereinheit nach Anspruch 1, wobei der Rahmen (110, 210, 310, 410) ferner eine Verstärkungsrippe (130, 230, 330, 430) aufweist, deren beide Enden mit dem Rahmen (110, 210, 310, 410) verbunden sind, um die Öffnung zu unterteilen.

4. Die Filtereinheit nach Anspruch 1, wobei die Befestigungseinheit (250, 350, 450) so konfiguriert ist, dass sie den Rahmen (210, 310, 410) so befestigt, dass der eine Teil und der andere Teil des Rahmens (210, 310, 410), der basierend auf der faltbaren Nut (240, 340, 440) unterteilt ist, einen geraden Winkel bilden.

5. Die Filtereinheit nach Anspruch 1, wobei die Befestigungseinheit (250, 350, 450) so konfiguriert ist, dass sie den Rahmen (210, 310, 410) so befestigt, dass der eine Teil und der andere Teil des Rahmens (210, 310, 410), der basierend auf der faltbaren Nut (240, 340, 440) unterteilt ist, nebeneinander angeordnet sind.

6. Die Filtereinheit nach Anspruch 1, wobei der Rahmen (110, 210, 310, 410) einen Griffabschnitt (112, 212, 312, 412), der an einem oberen Abschnitt davon ausgebildet ist, und einen Gleitabschnitt (114, 214, 314, 414), der entlang einer äußeren Umfangsfläche davon ausgebildet ist, umfasst.

7. Ein Luftreiniger, umfassend:
eine Filtereinheit (100, 200, 300, 400) nach einem der Ansprüche 1 bis 6; und
ein Gebläse (12) zum Erzeugen einer Blaskraft, damit Außenluft durch den Luftfilter strömen kann.

8. Der Luftreiniger nach Anspruch 7, wobei die Filtereinheit (100, 200, 300, 400) so angeordnet ist, dass Luft durch die Sammelfläche und die gegenüberliegende Fläche in dieser Reihenfolge strömt.

## Revendications

1. Une unité de filtration comprenant:
un cadre (110, 210, 310, 410) ayant une forme extérieure entourant une ouverture à travers laquelle l'air s'écoule et ayant une surface de collecte et une surface opposée à la surface de collecte;
un élément filtrant (120, 220, 320, 420) qui est disposé dans l'ouverture et filtre les substances étrangères contenues dans l'air qui s'écoule, dans lequel une rainure de pliage (140, 240, 340, 440) est formée sur la surface opposée du cadre (110, 210, 310, 410);
une unité de fixation (250, 350, 450) couplée au cadre (110, 210, 310, 410) et configurée pour fixer les positions relatives d'une partie et d'une autre partie du cadre (110, 210, 310, 410) divisées sur la base de la rainure de pliage (140, 240, 340, 440),
dans laquelle la rainure de pliage (140, 240, 340, 440) est formée en au moins deux points du cadre (110, 210, 310, 410) de sorte que lorsqu'une force externe est appliquée depuis la surface opposée du cadre (110, 210, 310, 410) vers la surface de collecte, l'une des parties et l'autre partie du cadre (110, 210, 310, 410) divisées en fonction de la rainure de pliage (140, 240, 340, 440) tournent relativement l'une vers l'autre, et le cadre (110, 210, 310, 410) est plié de telle sorte qu'une partie de la surface de collecte s'approche d'une autre partie de la surface de collecte, **caractérisé en ce que**
l'unité de fixation (250, 350) comprend:
un support (252, 352) formé sur l'une des deux parties du cadre (210, 310) divisées en fonction de la rainure de pliage (240, 340, 440), dans lequel le support comprend un trou de fixation (252a, 352a); et
une saillie de fixation (254, 354) formée pour faire saillie sur l'autre partie, de la première partie et l'autre partie du cadre (210, 310) divisé sur la base de la rainure de pliage (240, 340), sur laquelle le support (252, 352) n'est pas formé, et configurée pour s'étendre dans le trou de fixation (252a, 352a) du support (252, 352),
dans lequel le support (252, 352) s'étend à partir de l'une quelconque des parties du cadre (210, 310) de telle sorte qu'une partie du support (252, 352) soit disposée au-dessus de la rainure de pliage (240, 340).

2. L'unité de filtration selon la revendication 1, dans laquelle la rainure de pliage (140, 240, 340, 440) est formée à chacun des points du cadre (110, 210, 310, 410) et à un point opposé correspondant à celui-ci, de sorte que le cadre (110, 210, 310, 410) est plié en deux lorsqu'une force externe est appliquée depuis la surface opposée du cadre (110, 210, 310, 410) vers la surface de collecte.

3. L'unité de filtration selon la revendication 1, dans laquelle le cadre (110, 210, 310, 410) comprend en outre une nervure de renfort (130, 230, 330, 430) dont les deux extrémités sont reliées au cadre (110, 210, 310, 410) afin de diviser l'ouverture.

4. L'unité de filtration selon la revendication 1, dans laquelle l'unité de fixation (250, 350, 450) est configurée pour fixer le cadre (210, 310, 410) de telle sorte que la première partie et l'autre partie du cadre (210, 310, 410) divisées sur la base de la rainure de pliage (240, 340, 440) forment un angle plat.

5. L'unité de filtration selon la revendication 1, dans laquelle l'unité de fixation (250, 350, 450) est configurée pour fixer le cadre (210, 310, 410) de telle sorte que la première partie et la seconde partie du cadre (210, 310, 410) divisées sur la base de la rainure de pliage (240, 340, 440) soient disposées côte à côte.

6. L'unité de filtration selon la revendication 1, dans laquelle le cadre (110, 210, 310, 410) comprend une partie de poignée (112, 212, 312, 412) formée au niveau de sa partie supérieure et une partie coulissante (114, 214, 314, 414) formée le long de sa surface périphérique extérieure.

7. Un purificateur d'air comprenant :
une unité de filtration (100, 200, 300, 400) selon l'une des revendications 1 à 6; et
un ventilateur (12) pour générer une force de soufflage afin de permettre à l'air extérieur de circuler à travers le filtre à air.

8. Le purificateur d'air selon la revendication 7, dans lequel l'unité de filtration (100, 200, 300, 400) est disposée de telle sorte que l'air s'écoule à travers la surface de collecte et la surface opposée dans cet ordre.
